# EUROPÄISCHE PATENTANMELDUNG

(11) **EP 1 630 068 A1**
(43) Veröffentlichungstag der Anmeldung: **01.03.2006**
(21) Anmeldenummer: 05104485.7
(22) Anmeldetag: 25.05.2005
(51) Int. Cl.: B62D 3/12, F16H 55/28

(54) **Vorrichtung zum Andrücken einer Zahnstange an ein Ritzel**

(30) Priorität: 28.08.2004 DE 102004041697
(71) Anmelder: ZF Lenksysteme GmbH, 73527 Schwäbisch Gmünd (DE)
(72) Erfinder: Schmidt, Michael, 73655, Plüderhausen (DE); Dangelmaier, Ralf, 73529, Schwäbisch Gmünd (DE)

(57) **Zusammenfassung**

Eine Vorrichtung zum Andrücken einer Zahnstange (2) an ein Ritzel (4) weist ein Druckstück (3) und eine Stellschraube (6) auf. Das Druckstück (3) und die Stellschraube (6) werden in eine Gehäusebohrung (5) eines die Zahnstange (2) lagernden Lenkungsgehäuses (1) eingebracht. Die Stellschraube (6) weist wenigstens eine Auskragung (8) auf, welche radial über ein Gewinde (9) der Stellschraube (6) hinausragt und mit einer Außenfläche (10a,10b) der Gehäusebohrung (5) verstemmbar ist.

## Beschreibung

Die Erfindung betrifft eine Vorrichtung zum Andrücken einer Zahnstange an ein Ritzel mit einem Druckstück und einer Stellschraube gemäß dem Oberbegriff von Anspruch 1.

Die Erfindung betrifft auch ein Verfahren zur Montage einer Vorrichtung zum Andrücken einer Zahnstange an ein Ritzel gemäß dem Oberbegriff von Anspruch 14.

Eine gattungsgemäße Vorrichtung ist aus der DE 198 11 917 A1 bekannt.

Zahnstangenlenkungen für Kraftfahrzeuge weisen üblicherweise ein Lenkungsgehäuse auf, in dem eine Zahnstange längsverschieblich gelagert ist. Ein in dem Lenkungsgehäuse drehbar gelagertes Ritzel greift in die Verzahnung der Zahnstange ein und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeuges führt. Der Eingriff des Ritzels in die Zahnstange wird spielfrei gehalten, indem ein gegenüber dem Ritzel an der Zahnstange anliegendes Druckstück unter Federvorspannung die Zahnstange in das Ritzel drückt. Aus dem allgemeinen Stand der Technik ist dabei bekannt, dass das Druckstückspiel über eine Stellschraube eingestellt wird, welche dabei auch die Federvorspannung beeinflusst.

Das Druckstück muss derart gestaltet sein bzw. derart gegen die Zahnstange drücken, dass eine Kopplung der Zahnstange und des Ritzels ohne Spiel der miteinander in Eingriff stehenden Zähne aufrecht erhalten werden kann. Dabei müssen Fehler hinsichtlich der Exzentrität des Ritzels, seines axialen Spiels und des Verschleißes der Zähne berücksichtigt werden. Weiterhin muss der Mechanismus in der Lage sein, Stöße, die von den gelenkten Rädern stammen, wenn diese beispielsweise auf ein Hindernis stoßen, ohne Beschädigungen zu ertragen.

Auch bei sogenannten Steer-by-wire-Lenkungen und bei Elektrolenkungen, bei denen auf eine drehfeste Verbindung mit der Lenksäule verzichtet werden kann, muss der Eingriff des Ritzels in die Zahnstange spielfrei gehalten werden. Auch in diesem Fall drückt ein gegenüber dem Ritzel an der Zahnstange anliegendes Druckstück unter Federvorspannung die Zahnstange gegen das Ritzel.

Das Druckstück und anschließend die Stellschraube werden in eine Gehäusebohrung des die Zahnstange lagernden Lenkungsgehäuses eingebracht. Zwischen dem Druckstück und der Stellschraube ist dabei in der Regel ein Federelement angeordnet, welches in vielfältiger Art und Weise ausgestaltet sein kann. Hierzu wird beispielsweise auf die gattungsgemäße Schrift verwiesen. Auch hinsichtlich der Ausgestaltung des Druckstücks sind aus dem allgemeinen Stand der Technik vielfältige Lösungen bekannt, wozu beispielsweise auf die DE 100 14 336 A1 sowie die DE 44 22 551 C1 verwiesen wird.

Die Gehäusebohrung weist in ihrem oberen Bereich, in den die Stellschraube eingeschraubt wird, ein Gewinde auf. Durch das Einschrauben der Stellschraube in die Gehäusebohrung wird die Federvorspannung eingestellt, mit der das Druckstück auf die Zahnstange drückt. Zusätzlich dazu dient die Stellschraube in der Regel als Endanschlag für die axiale Bewegung des Druckstücks. Die Stellschraube bestimmt somit das Druckstückspiel.

Das Einschrauben der Stellschraube bzw. das Einstellen des Druckstückspiels erfolgt in der Praxis dadurch, dass die Stellschraube auf ein definiertes Moment angezogen wird. Anschließend wird das Gewinde der Stellschraube mit dem Gewinde der Gehäusebohrung mehrfach verstemmt. Danach wird die Stellschraube zum Einstellen des Druckstückspiels nochmals um einige Winkelgrade verstellt. Dabei muss beachtet werden, dass ein definiertes Lösemoment der Stellschraube nicht unterschritten wird.

Ein Verstemmen nach dem Einstellen des Druckstückspiels ist gemäß dem Stand der Technik nicht möglich, da durch das Verstemmen das Spiel zwischen den Gewinden der Stellschraube und der Gehäusebohrung eliminiert wird, wodurch sich das Druckstückspiel verändert. D.h. ein exaktes Einstellen des Druckstückspiels ist gemäß dem Stand der Technik erst nach dem Verstemmen möglich. Dies führt jedoch in nachteilhafter Weise dazu, dass das geforderte Mindest-Lösemoment nicht prozesssicher haltbar ist bzw. gewährleistet werden kann. Da das Gewinde durch die Verstemmung teilweise zerstört wird, muss dieses zumindest nachgeschnitten werden, wenn die Stellschraube beispielsweise wegen Nacharbeiten oder zu Kundendienstzwecken demontiert werden muss. In der Praxis führt das häufig dazu, dass das gesamte Lenkungsgehäuse aufgrund des zerstörten Gewindes nicht mehr verwendet werden kann.

Von Nachteil ist darüber hinaus, dass bei dem Verstemmen Schmutz in Form von Spänen anfällt, wodurch die Funktionalität des Systems beeinträchtigt werden kann bzw. die Vorrichtung vor der endgültigen Auslieferung gereinigt werden muss.

Der vorliegenden Erfindung liegt daher die Aufgabe zugrunde, eine Vorrichtung zum Andrücken einer Zahnstange an ein Ritzel und ein Verfahren zur Montage einer derartigen Vorrichtung zu schaffen, durch welche die vorgenannten Nachteile des Standes der Technik gelöst werden.

Diese Aufgabe wird erfindungsgemäß hinsichtlich der Vorrichtung durch die kennzeichnenden Merkmale von Anspruch 1 gelöst.

Diese Aufgabe wird erfindungsgemäß hinsichtlich des Verfahrens durch die kennzeichnenden Merkmale von Anspruch 14 gelöst.

Dadurch, dass die Stellschraube wenigstens eine Auskragung aufweist, welche radial über ein Gewinde der Stellschraube hinausragt und diese Auskragung mit einer Außenfläche der Gewindebohrung verstemmbar ist, wird eine Zerstörung des Gewindes vermieden. Die Stellschraube und somit auch das Druckstück können folglich einfach und problemlos wieder demontiert werden. Das geforderte Mindest-Lösemoment ist durch die erfindungsgemäße Lösung nach dem Verstemmen prozesssicher gewährleistet. Darüber hinaus kann der Verstemmvorgang davon abhängig gemacht werden, dass die Lenkung als einwandfrei funktionstüchtig eingestuft wird. Somit sind bis zu diesem Zeitpunkt in einfacher Weise Nacharbeiten möglich. Auch nach dem Verstemmen sind Nacharbeiten problemlos möglich, indem das Lösemoment der Stellschraube überwunden wird. Nach Beendigung der Nacharbeiten kann die Auskragung der Stellschraube erneut mit einer Außenfläche der Gewindebohrung verstemmt werden. Dies hat zur Folge, dass das Druckstückspiel auch beim Kunden nach einer beliebigen Anzahl von bereits gefahrenen Kilometern nachgestellt werden kann.

Ein eventuelles Setzen der Stellschraube und somit ein Verändern des Spiels zwischen Stellschraube und Druckstück, kann durch ein Andrücken der Zahnstange gegen das Druckstück nach/während des Verstemmvorgangs revidiert/verhindert werden.

Ein wesentlicher Vorteil der erfindungsgemäßen Lösung besteht darin, dass durch den Verstemmvorgang das eingestellte Druckstückspiel nicht mehr verändert wird. Im Unterschied zum Stand der Technik ist es somit nach dem Verstemmen nicht mehr notwendig, die Stellschraube zu verstellen, so dass das geforderte Mindest-Lösemoment prozesssicher gewährleistet werden kann.

Von Vorteil bei der erfindungsgemäßen Vorrichtung und dem erfindungsgemäßen Montageverfahren ist darüber hinaus, dass durch den Verstemmprozess kein Schmutz, insbesondere keine Späne, anfallen.

Von Vorteil ist es, wenn die zum Verstemmen mit der Auskragung vorgesehene Außenfläche der Gehäusebohrung wenigstens eine Einkerbung, Vertiefung bzw. Nut aufweist.

In einfacher Weise kann somit durch den Verstemmvorgang ein Teil der Auskragung der Stellschraube in die wenigstens eine Einkerbung, Vertiefung bzw. Nut gedrückt werden. Dadurch ergibt sich eine zuverlässige Verbindung der Stellschraube mit der Gehäusebohrung, durch die verhindert wird, dass sich die Stellschraube nachträglich verstellt. In Versuchen hat es sich als vorteilhaft herausgestellt, wenn wenigstens zwei Einkerbungen, Vertiefungen bzw. Nuten in die Außenfläche der Gehäusebohrung eingebracht sind. Bei der Außenfläche der Gewindebohrung kann es sich dabei vorzugsweise um die Stirnfläche der Gewindebohrung handeln. Bei der Außenfläche der Gewindebohrung kann es sich jedoch auch um die zylinderförmige Außenwandung der Gewindebohrung handeln.

Von Vorteil ist es, wenn die Stirnfläche eine Mehrzahl von Nuten aufweist, die sich vorzugsweise strahlenförmig bzw. radial von der Gehäusebohrung nach außen erstrecken. Weiterhin ist es von Vorteil, wenn die Auskragung der Stellschraube als wenigstens teilweise umlaufender Bund ausgebildet ist.

Die strahlenförmig bzw. radial nach außen verlaufenden Nuten ermöglichen eine besonders drehsichere Verstemmung der Auskragung bzw. des Bundes der Stellschraube. Die Ausgestaltung der Stellschraube mit einem Bund lässt sich dabei in besonders einfacher und kostengünstiger Weise realisieren. Dabei kann vorgesehen sein, dass der Bund dünnwandig und einstückig mit der Stellschraube als Kaltfließpressteil ausgebildet ist. Vorzugsweise können die Stellschraube und der Bund dabei aus einer Aluminiumlegierung gebildet sein. In Versuchen hat sich dabei eine Aluminium-Knetlegierung als besonders geeignet herausgestellt.

Vorgesehen sein kann, dass der Bund am Ende der vorgesehenen Einschraubbewegung, d.h. wenn die Stellschraube mit dem vorgesehenen Moment angezogen ist, wenigstens annähernd auf der Stirnfläche der Gehäusebohrung aufliegt (möglich ist auch ein Abstand als Einstellreserve). Ein Verstemmen des Bundes mit den Nuten der Stirnfläche ist somit in einfacher Weise möglich.

Von Vorteil ist es, wenn die Nuten in die Stirnfläche der Gehäusebohrung eingegossen sind. Die Nuten lassen sich somit in besonders einfacher und kostengünstiger Weise herstellen. Erfindungsgemäß kann vorgesehen sein, dass der Bund lediglich mit einer bestimmten Anzahl an Nuten verstemmt wird. Die restlichen Nuten, d.h. die Nuten, die nicht mit dem Bund verstemmt sind, können dabei für ein erneutes Verstemmen z.B. zu Kundendienstzwecken vorgesehen sein.

Von Vorteil ist es, wenn der Durchmesser des Bundes wenigstens annähernd dem Außendurchmesser der Gehäusebohrung entspricht. Somit werden unnötige Ecken und Kanten vermieden und es ist eine ausreichende Fläche vorhanden, die ein prozesssicheres Verstemmen ermöglicht.

In einer Ausgestaltung der Erfindung, bei der die Auskragung der Stellschraube bzw. der Bund der Stellschraube mit der zylindrischen Außenwandung der Gehäusebohrung verstemmt wird, kann vorgesehen sein, die Auskragung bzw. den Bund vor dem Verstemmen abzuwinkeln, vorzugsweise um 90°, und anschließend das abgewinkelte Ende mit der Außenwandung zu verstemmen. Auch dadurch lässt sich ein nachträgliches Verstellen der Stellschraube zuverlässig verhindern. Vorgesehen sein kann dabei auch, dass die Stellschraube bereits über entsprechend abgewinkelte Enden verfügt.

Vorteilhafte Ausgestaltungen und Weiterbildungen der Erfindung ergeben sich aus den weiteren Unteransprüchen. Nachfolgend ist anhand der Zeichnung ein Ausführungsbeispiel der Erfindung prinzipmäßig dargestellt.

Es zeigt:
- Fig. 1: einen Schnitt durch die erfindungsgemäße Vorrichtung; und
- Fig. 2: eine vergrößerte, prinzipmäßige Seitenansicht einer Gehäusebohrung und eines Bundes einer Stellschraube.

Zahnstangenlenkungen, insbesondere für Kraftfahrzeuge, mit Druckstücken zum Kuppeln einer Zahnstange gegen ein Ritzel sind bereits hinlänglich bekannt, wozu nur beispielsweise auf die DE 29 28 732 C2 und die DE 198 11 917 A1 verwiesen wird. Nachfolgend wird deshalb lediglich auf die für die Erfindung relevanten Merkmale näher eingegangen. Aus dem allgemeinen Stand der Technik und aus den vorgenannten Patentpublikationen ist auch das Grundprinzip eines derartigen Kupplungsmechanismus für eine Zahnstange und deren Antriebsritzel hinlänglich bekannt.

Die erfindungsgemäße Vorrichtung eignet sich in besonderer Weise für Zahnstangenlenkungen eines Kraftfahrzeuges.

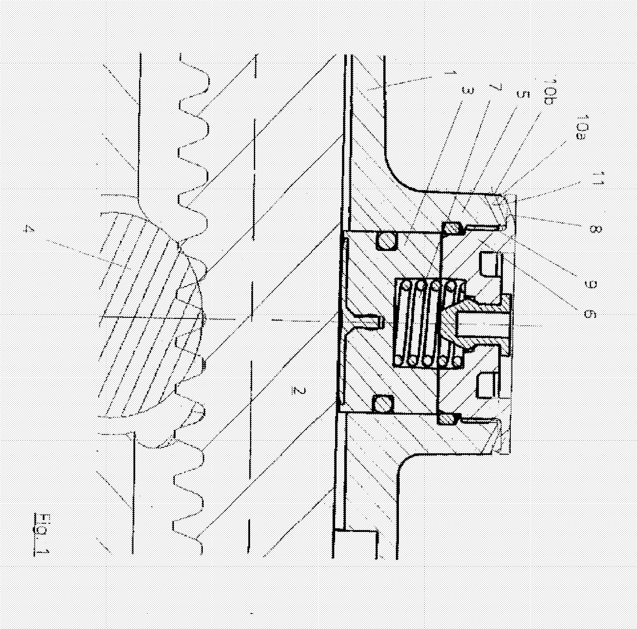

Fig. 1 zeigt einen Ausschnitt einer Zahnstangenlenkung. Dabei ist in einem Lenkungsgehäuse 1 eine längsverschiebliche Zahnstange 2 gelagert. Ein Druckstück 3 dient zum Andrücken der Zahnstange 2 an ein Ritzel 4. Das Druckstück 3 ist in einer Gehäusebohrung 5 des Lenkungsgehäuses 1 angeordnet. Das Druckstück 3 ist in der Gehäusebohrung 5 axial verschiebbar gelagert. Die axiale Bewegung des Druckstücks 3 wird durch eine Stellschraube 6, welche in die Gehäusebohrung 5 eingeschraubt ist, begrenzt. Das Druckstück 3 ist an der von der Stellschraube 6 abgewandten Seite als Lagerstelle für die Zahnstange 2 ausgebildet.

Aus der Übertragung von Kräften zwischen dem Ritzel 4 und der Zahnstange 2 resultiert eine axiale Bewegung des Druckstücks 3 aufgrund der Zahntrennkräfte und der Lagerfunktion des Druckstücks 3. Die dabei mögliche axiale Bewegung des Druckstücks 3 wird durch die Stellschraube 6 eingestellt und sichert das Druckstückspiel.

Zwischen dem Druckstück 3 und der Stellschraube 6 ist in bekannter Weise ein als Druckfeder ausgebildetes Federelement 7 angeordnet. Durch die Federkraft der Druckfeder 7 bzw. dessen Vorspannung durch die Stellschraube 6 ergibt sich der Druck, mit dem das Druckstück 3 gegen die Zahnstange 2 drückt.

Das Druckstück 3 sowie die Druckfeder 7 können konstruktiv in vielfältiger Weise ausgebildet sein.

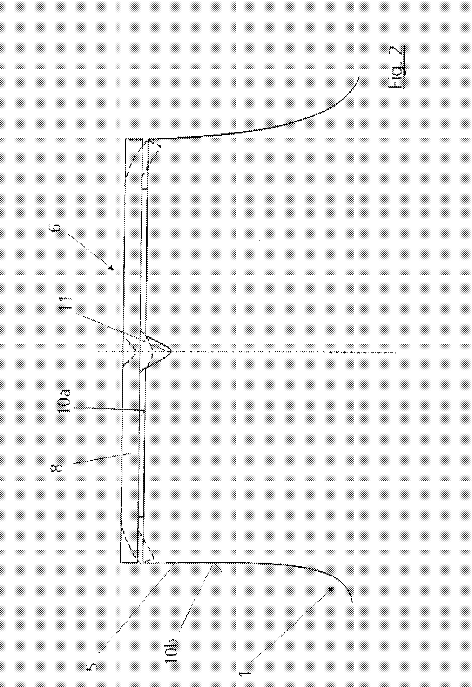

Wie aus Fig. 1 und Fig. 2 ersichtlich ist, weist die Stellschraube 6 eine als Bund ausgebildete Auskragung 8 auf. Der Bund 8 ragt dabei radial über ein Gewinde 9 der Stellschraube 6 hinaus und umläuft die Stellschraube 6 vollständig. Der Bund 8 ist derart gestaltet, dass dieser mit einer Außenfläche 10a, 10b der Gehäusebohrung 5 verstemmbar ist. Im Ausführungsbeispiel ist dabei vorgesehen, dass die Stirnfläche 10a der Gehäusebohrung 5 die zum Verstemmen mit dem Bund 8 vorgesehene Außenfläche darstellt.

Prinzipiell kann der Bund 8 (bei entsprechender Gestaltung) auch mit der Außenfläche, welche die zylindrische Außenwand 10b der Gehäusebohrung 5 bildet, verstemmt werden.

Wie aus Fig. 1 und Fig. 2 ersichtlich ist, weist die zum Verstemmen mit dem Bund 8 vorgesehene Stirnfläche 10a der Gehäusebohrung 5 eine Mehrzahl von Nuten 11 auf. Die Nuten 11 verlaufen dabei strahlenförmig bzw. radial von der Innenseite der Gehäusebohrung 5 nach außen. Im Ausführungsbeispiel ist vorgesehen, dass die Nuten 11 in die Gehäusebohrung 5 eingegossen sind.

Wie aus Fig. 1 und Fig. 2 des weiteren ersichtlich ist, ist der Bund 8 dünnwandig ausgebildet, so dass dieser in einfacher Weise mittels einem Verstemmvorgang in die vorgesehenen Nuten 11 gedrückt werden kann. Im Ausführungsbeispiel ist vorgesehen, dass die Stellschraube 6 und der Bund 8 einstückig und als Kaltfließpressteil ausgebildet sind. Eine Ausbildung aus einer Aluminium-Knetlegierung hat sich dabei als besonders geeignet herausgestellt.

Im Ausführungsbeispiel ist vorgesehen, dass der Bund 8 in wenigstens zwei Nuten 11 gedrückt wird. Prinzipiell ist zwar auch ein Verstemmen mit nur einer Nut (bzw. auch ganz ohne Nuten) möglich, das Verstemmen in zwei oder mehrere Nuten 11 führt jedoch zu einer besonders drehfesten Verbindung.

Im Ausführungsbeispiel ist vorgesehen, dass die Stirnfläche 10a vier Nuten 11 aufweist und der Bund 8 mit zwei Nuten 11 verstemmt wird, sodass zwei Nuten 11 im ersten Verstemmvorgang unverstemmt bleiben. Diese Nuten 11 dienen einem erneuten Verstemmen, beispielsweise zu Kundendienstzwecken. Die Stellschraube 6 kann somit bei Bedarf gelöst und anschließend wieder prozesssicher verstemmt werden.

Selbstverständlich kann auch eine beliebige andere Anzahl von Nuten 11 vorgesehen sein.

Gemäß Fig. 1 und Fig. 2 ist vorgesehen, dass der Bund 8 einen Außendurchmesser aufweist, der dem Außendurchmesser der Gehäusebohrung 5 entspricht.

Die Stellschraube 6 bzw. deren Bund 8 ist derart auf die Gehäusebohrung 5 abgestimmt, dass der Bund 8 einen geringen Abstand zu der Stirnfläche 10a aufweist, d.h. fast aufliegt und diese annähernd vollständig abdeckt, wenn die Stellschraube 6 mit dem vorgegebenen Moment angezogen oder das vorgegebene Spiel zwischen Druckstück 3 und Stellschraube 6 eingestellt ist. Anschließend erfolgt die Verstemmung eines Teils des Bundes 8 mit den vorgesehenen Nuten 11.

Fig. 2 zeigt den Bund 8 der Stellschraube 6 in einer unverstemmten Darstellung (liniert) sowie in einer verstemmten Darstellung (strichliniert).

Fig. 2 zeigt, dass der Bund 8, wenn die Stellschraube 6 mit dem vorgesehenen Moment angezogen oder das vorgegebene Spiel zwischen Druckstück 3 und Stellschraube 6 eingestellt ist, nicht auf der Stirnfläche 10a aufliegt, sondern ein als Einstellreserve verwendbarer Abstand vorhanden ist. Der Abstand ist dabei, wie aus Fig. 2 ersichtlich ist, relativ gering, so dass dieser Abstand den Verstemmprozess bzw. das Eindrücken eines Teils des Bundes 8 in die vorgesehenen Nuten 11 nicht beeinflusst.

Selbstverständlich kann auch vorgesehen sein, dass der Abstand des Bundes 8 zu der Stirnfläche 10a größer oder kleiner ist, bzw. der Bund 8 auf der Stirnfläche 10a aufliegt.

## Patentansprüche

1. Vorrichtung zum Andrücken einer Zahnstange an ein Ritzel mit einem Druckstück und einer Stellschraube, welche in eine Gehäusebohrung eines die Zahnstange lagernden Lenkungsgehäuses einbringbar sind,
**dadurch gekennzeichnet , dass**
die Stellschraube (6) wenigstens eine Auskragung (8) aufweist, welche radial über ein Gewinde (9) der Stellschraube (6) hinausragt und mit einer Außenfläche (10a,10b) der Gewindebohrung (5) verstemmbar ist.

2. Vorrichtung nach Anspruch 1,
**dadurch gekennzeichnet , dass**
die zum Verstemmen mit der Auskragung (8) vorgesehene Außenfläche (10a,10b) der Gewindebohrung (5) wenigstens eine Einkerbung, Vertiefung und/oder Nut (11) aufweist.

3. Vorrichtung nach Anspruch 1 oder 2,
**dadurch gekennzeichnet , dass**
eine Stirnfläche (10a) der Gewindebohrung (5) die zum Verstemmen mit der Auskragung (8) vorgesehene Außenfläche darstellt.

4. Vorrichtung nach Anspruch 3,
**dadurch gekennzeichnet , dass**
die Stirnfläche (10a) eine Mehrzahl von Nuten (11) aufweist.

5. Vorrichtung nach Anspruch 4,
**dadurch gekennzeichnet , dass**
sich die Nuten (11) strahlenförmig bzw. radial von der Gehäusebohrung (5) nach außen erstrecken.

6. Vorrichtung nach Anspruch 3, 4 oder 5,
**dadurch gekennzeichnet , dass**
die Nuten (11) in die Stirnfläche (10a) der Gehäusebohrung (5) eingegossen sind.

7. Vorrichtung nach einem der Ansprüche 1 bis 6,
**dadurch gekennzeichnet , dass**
die Auskragung als wenigstens teilweise umlaufender Bund (8) ausgebildet ist.

8. Vorrichtung nach Anspruch 7,
**dadurch gekennzeichnet , dass**
der Bund (8) dünnwandig ausgebildet ist.

9. Vorrichtung nach Anspruch 7 oder 8,
**dadurch gekennzeichnet , dass**
die Stellschraube (6) und der Bund (8) einstückig als Kaltfließpressteil ausgebildet sind.

10. Vorrichtung nach Anspruch 7, 8 oder 9,
**dadurch gekennzeichnet , dass**
die Stellschraube (6) und der Bund (8) aus einer Aluminiumlegierung ausgebildet sind.

11. Vorrichtung nach einem der Ansprüche 7 bis 10,
**dadurch gekennzeichnet , dass**
der Durchmesser des Bundes (8) wenigstens annähernd dem Außendurchmesser der Gehäusebohrung (5) entspricht.

12. Vorrichtung nach einem der Ansprüche 1 bis 11,
**dadurch gekennzeichnet , dass**
wenigstens zwei Nuten (11) vorgesehen sind, in die ein Teil des Bundes (8) durch einen Verstemmvorgang eindrückbar ist.

13. Vorrichtung nach Anspruch 12,
**dadurch gekennzeichnet , dass**
weitere Nuten (11) für nachträgliche Verstemmvorgänge vorgesehen sind.

14. Verfahren zur Montage einer Vorrichtung zum Andrücken einer Zahnstange an ein Ritzel, mit einem Druckstück und einer Stellschraube, wobei die Stellschraube wenigstens eine Auskragung aufweist, welche radial über ein Gewinde der Stellschraube hinausragt, wonach das Druckstück und anschließend die Stellschraube in eine Gewindebohrung eines die Zahnstange lagernden Lenkungsgehäuses eingebracht werden,
**dadurch gekennzeichnet , dass**
mittels der Stellschraube (6) ein gewünschtes Druckstückspiel eingestellt und anschließend die Auskragung (8) der Stellschraube (6) durch einen Verstemmvorgang mit einer Außenfläche (10) der Gewindebohrung (5) verstemmt wird.

15. Verfahren nach Anspruch 14,
**dadurch gekennzeichnet , dass**
die Auskragung als wenigstens teilweise umlaufender Bund (8) ausgebildet und die Außenfläche (10a,10b) mit Nuten (11) versehen ist, wonach ein Teil des Bundes (8) der Stellschraube (6) in zwei oder mehrere Nuten (11) gedrückt wird.

16. Verfahren nach Anspruch 15,
**dadurch gekennzeichnet , dass**
ein oder mehrere Nuten (11) von dem Verstemmvorgang ausgenommen werden.
